# EUROPÄISCHE PATENTSCHRIFT

(11) **EP 3 593 213 B1**
(45) Veröffentlichungstag und Bekanntmachung des Hinweises auf die Patenterteilung: **05.01.2022**
(21) Anmeldenummer: 18705395.4
(22) Anmeldetag: 15.02.2018
(51) Int. Cl.: G05B 19/042

(54) **VERFAHREN ZUM PARAMETRIEREN EINES FELDGERÄTS DER AUTOMATISIERUNGSTECHNIK**
METHOD FOR PARAMETERIZING AN AUTOMATION FIELD DEVICE
PROCÉDÉ DE PARAMÉTRAGE D'UN APPAREIL DE TERRAIN DE LA TECHNIQUE D'AUTOMATISATION

(30) Priorität: 08.03.2017 DE 102017104912
(43) Veröffentlichungstag der Anmeldung: 15.01.2020
(73) Patentinhaber: Endress+Hauser Process Solutions AG, 4153 Reinach (CH)
(72) Erfinder: ALTENDORF, Matthias, 79539 Lörrach (DE); DA SILVA NETO, Eugenio Ferreira, 4105 Biel-Benken (CH); HOFMANN, Andreas, 4053 Basel (CH)
(74) Vertreter: Andres, Angelika Maria
(86) Internationale Anmeldenummer: PCT/EP2018/053762
(87) Internationale Veröffentlichungsnummer: WO 2018/162203

(56) Entgegenhaltungen:
- DE-A1-102007 062 395
- DE-A1-102010 029 952
- DE-A1-102012 107 673
- DE-A1-102012 112 842

## Beschreibung

Die Erfindung betrifft ein Verfahren zum Parametrieren eines Feldgeräts der Automatisierungstechnik, welches mit einem Server über ein erstes Kommunikationsnetzwerk in Kommunikationsverbindung steht

Aus dem Stand der Technik sind bereits Feldgeräte bekannt geworden, die in industriellen Anlagen zum Einsatz kommen. In der Prozessautomatisierung ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über drahtlose oder drahtgebundene Kommunikationsnetzwerkemit übergeordneten Einheiten verbunden. Bei den drahtgebundenen Kommunikationsnetzwerken handelt es sich typischerweise um Feldbusse wie Profibus^{®}, Foundation^{®} Fieldbus, HART^{®}, etc., oder um moderne industrielle Kommunikationsnetzwerke oder IT-Kommunikationsnetzwerke wie beispielsweise (Industrial-)Ethernet. Bei den drahtlosen Kommunikationsnetzwerken handelt es sich beispielsweise um drahtlose Feldbusse wie WirelessHART^{®} etc., oder um drahtlose IT-Kommunikationsnetzwerke wie beispielsweise WLAN. Bei den übergeordneten Einheiten handelt es sich um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Feldgeräte können sowohl als 4-Leiter-Geräte ausgestaltet sein, wobei diese Feldgeräte über wenigstens eine spezielle Netzleitung mit elektrischer Energie versorgt werden, als auch als 2-Leiter-Geräte ausgestaltet sein, wobei die Energieversorgung und die Datenleitung dieser Feldgeräte über ein und dieselbe Leitung erfolgt.

Des Weiteren kann es vorgesehen sein, insbesondere beim Einsatz der Feldgeräte in weitläufigen Anlagen im Freien, wie beispielsweise Pipelines, wo die externe Stromversorgung des Messgeräts über Kabel schwierig ist, die Energieversorgung der Feldgeräte mit Batterien zu realisieren. Alternativ ist das Feldgerät energieautark ausgestaltet und weist beispielsweise ein in das Gehäuse integriertes Solarmodul auf.

Feldgeräte weisen mitunter eine Vielzahl von Parametern auf, mit deren Hilfe sie an eine Applikation angepasst, beziehungsweise deren Funktionen eingestellt werden können. Die Parameter sind hierbei unterteilt in statische und dynamische Parameter. Statische Parameter stellen zeitlich unveränderliche Parameter dar. Dynamische Parameter enthalten nicht modellierte Prozesscharakteristika, die vom Kunden manuell eingegeben werden, wie beispielsweise die Tankgröße eines mit Medium gefüllten Tanks.

Ein sogenanntes Parametrieren, bei welchem den einzelnen Parametern eines Feldgeräts Parameterwerte zugewiesen werden, wird insbesondere sowohl bei der Inbetriebnahme eines Feldgeräts, als auch mitunter im Rahmen der Instandhaltung eines Feldgeräts, beispielsweise bei einer Wartung, durchgeführt.

Durch die Komplexität der Parameter und aufgrund der mitunter sehr großen Anzahl an statischen und dynamischen Parametern eines Feldgeräts ist es für einen Anlagenbetreiber ohne externe Hilfe oft nicht möglich, sein Feldgerät selbst zu parametrieren. Neben detaillierten Kenntnissen der Bedeutungen und der Wirkung der einzelnen Parameter benötigt der Anlagenbetreiber genaue Kenntnisse über die spezifischen Applikationen, in denen seine Feldgeräte eingesetzt sind, um ein Feldgerät applikationsspezifisch zu parametrieren. Selbst unter Zuhilfenahme eines externen Servicetechnikers, welcher typischerweise vom Feldgerätehersteller bereitgestellt wird, ist das Parametrieren oftmals ein aufwendiger und zeitintensiver Vorgang.

Die DE 10 2010 029952 A1 und die DE 10 2007 062395 A1 offenbaren Verfahren zum Parametrieren von Feldgeräten, wobei die erstgenannte Schrift das Parametrieren mithilfe von digitalen Abbildern der Feldgeräte beschreibt.

Die DE 10 2012 107673 A1 offenbart ein Verfahren zum Austauschen von Feldgeräten, wobei Parametersätze für ein Austauschfeldgerät auf einem Server hinterlegt sind.

Die DE 10 2012 112842 A1 offenbart ein System der Automatisierungstechnik, wobei eine spezifische Anwendungs-Firmware für Feldgeräte für einen speziellen Anwendungszweck konfigurierbar ist, und wobei die Bestandteile der Firmware von einem Server herunterladbar sind.

Ausgehend von dieser Problematik liegt der Erfindung die Aufgabe zugrunde, ein Verfahren vorzustellen, dass auf einfach Art und Weise eine Inbetriebnahme beziehungsweise Instandhaltung eines Feldgeräts erlaubt.

Die Aufgabe wird durch ein Verfahren gemäß Patentanspruch 1 gelöst.

Der große Vorteil des erfindungsgemäßen Verfahrens besteht darin, dass ein Parametrieren eines Feldgeräts auf einfache Art und Weise durchgeführt werden kann. Der Bediener benötigt keinerlei Kenntnisse über die einzelnen Parameter eines Feldgeräts, bzw. über die Abhängigkeiten der Parameter untereinander, da die Anwendungsapplikation selbstständig einen für die Anwendung des Feldgeräts passenden, bevorzugt sogar den für die Anwendung des Feldgeräts optimalen Parametersatz, erstellt.

Erfindungsgemäß ist es vorgesehen, dass das Verfahren durch einen Bediener initiiert wird. Im Zuge von Instandhaltungsarbeiten, oder bei einem Einsatz eines bereits gebrauchten Feldgeräts in einer neuen Messstelle oder derselben, modifizierten Messstelle, kann so einfach ein zur Messstelle passender Parametersatz für das Feldgerät erstellt und dieses mittels des erstellten Parametersatz parametriert werden.

Weiterhin ist es erfindungsgemäß vorgesehen, dass in dem Falle, dass auf dem Server nicht ausreichend Informationen zum Erstellen und Vorschlagen eines Parametersatzes vorhanden sind, der Server weitere Informationen über das Feldgerät von dem Bediener abfragt. Auch hier benötigt der Bediener keinerlei Wissen über die Parameter des Feldgeräts. Die weiteren Informationen werden insbesondere kontextbezogen abgefragt. Beispielsweise könnte der Server den Bediener fragen, welches Prozessmedium durch eine Rohrleitung fließt, um selbstständig den korrekten Wert des Dichteparameters des Feldgeräts für eine Durchflussmessung zu bestimmen. Ist dem Bediener das Messmedium nicht bekannt, kann er auch dessen Eigenschaften formulieren ("farblos", "geruchsneutral", etc.), wodurch der Server aus diesen Eigenschaften auf die angefragte fehlende weitere Information selbstständig schließen kann.

Hierfür können auch die digitalen Abbilder der weiteren Komponenten der Anlage herangezogen werden. Diese enthalten typischerweise Applikationsprofile, welche zur Erstellung des Parametersatzes, bzw. zur Erstellung der Abfragen, von den kognitiven Algorithmen verwendet werden.

Weiterhin ist es erfindungsgemäß vorgesehen, dass die Abfragen des Servers mittels kognitiven Algorithmen abhängig von den bereits vorhandenen Informationen, von der Historie der Anlage, in der sich die Messstelle des Feldgeräts befindet, und von den erfolgten Antworten des Bedieners dynamisch generiert werden. Das bedeutet, dass der Server keine Abfragen aus einem vorgefertigten Katalog verwendet, sondern diese Abfragen je nach Situation neu erstellt werden. So können die fehlenden Informationen zielgerecht und zeitsparend erlangt werden.

Feldgeräte, welche im Zusammenhang mit der Erfindung genannt sind, wurden bereits im einleitenden Teil der Beschreibung beispielhaft beschrieben.

Neben den digitalen Abbildern der Feldgeräte können sich auch digitale Abbilder der weiteren Komponenten der Anlage, beispielsweise von Behältern, Rohrleitungen, Prozesseinheiten, etc. auf dem Server befinden.

Gemäß einer vorteilhaften Ausgestaltung des erfindungsgemäßen Verfahrens ist vorgesehen, dass die Informationen über das Feldgerät beim Bestellvorgang des Feldgeräts auf den Server geladen werden und das digitale Abbild erstellt wird, und wobei jede Änderung der Konfigurationseinstellungen und der messstellenrelevanten Informationen an den Server zur Aktualisierung des digitalen Abbilds übermittelt werden. Jede Änderung des physischen Feldgeräts während dessen Lebenszeit verursacht somit dieselbe Änderung am digitalen Abbild des Feldgeräts. Das Feldgerät und dessen digitales Abbild sind daher zu jedem Zeitpunkt äquivalent.

Es kann vorgesehen sein, dass das Verfahren, insbesondere von einer Bestellplattform, nach einer Bestellung des Feldgeräts initiiert wird, wobei die Identifikationsinformation, insbesondere während des Fertigungsvorgangs des Feldgeräts, an den Server übermittelt wird und das Feldgerät nach seiner Fertigung mit dem übermittelten Parametersatz konfiguriert wird. Jeder Fertigungsschritt wird hierbei an den Server zu Modifikation des digitalen Abbilds des Feldgeräts übermittelt. Nach Fertigung des Feldgeräts wird dieses dem Kunden bereits mit dem erstellten Parametersatz beschrieben geliefert.

Gemäß einer vorteilhaften Ausgestaltung des erfindungsgemäßen Verfahrens ist vorgesehen, dass der Bediener den Befehl zum Parametrieren des Feldgeräts über ein mobiles Gerät, welches über ein zweites Kommunikationsnetzwerk mit dem Server verbunden ist und über ein Anzeige- und Bedienelement und/oder Spracheingabe- und Sprachausgabemittel verfügt, oder über das Feldgerät direkt, welches über ein Anzeigeund Bedienelement und/oder Spracheingabe- und Sprachausgabemittel verfügt, mittels Eingabe eines Befehls an dem jeweiligen Anzeige- und Bedienelement oder mittels Spracheingabe an dem jeweiligen Spracheingabe- und Sprachausgabemittel an den Server übermittelt. Bei dem mobilen Gerät handelt es sich insbesondere um eine Bedieneinheit, bzw. um eine mobile Konfigurationseinheit wie den "Field Xpert", welcher von der Anmelderin produziert und vertrieben wird, um einen Laptop, um ein mobiles Endgerät wie ein Tablet oder Smartphone oder um ein Wearable wie beispielsweise eine Datenbrille (bspw. Google Glasses) oder eine Smartwatch.

Bei einem Anzeigeelement handelt es sich insbesondere um ein Display, beispielsweise ein LCD- oder LED-Display. Bei einem Bedienelement handelt es sich insbesondere um Tasten, Knöpfe oder Schalter. Auch ein kombiniertes Anzeige- und Bedienelement im Sinne eines Touchscreens kann vorgesehen sein.

Bei einem Spracheingabemittel handelt es sich bevorzugt um ein Mikrofon. Bei einem Sprachausgabemittel handelt es sich bevorzugt um einen Lautsprecher.

Gemäß einer vorteilhaften Ausgestaltung des erfindungsgemäßen Verfahrens ist vorgesehen, dass als Identifikationsinformation die Seriennummer und/oder der TAG des Feldgeräts an den Server übermittelt werden. Alternativ kann es sich auch um eigene, eigens in der spezifischen Anlage verwendete Bezeichnungen handeln.

Gemäß einer vorteilhaften Ausgestaltung des erfindungsgemäßen Verfahrens ist vorgesehen, dass der Bediener die Seriennummer manuell im mobilen Gerät eingibt, oder das mobile Gerät die Seriennummer aus dem Feldgerät ausliest. Die Seriennummer kann beispielsweise über eine drahtgebundene Verbindung oder eine drahtlose Verbindung, insbesondere per Bluetooth, NFC oder per im Feldgerät eingebetteten WiFi, ausgelesen werden.

Gemäß einer vorteilhaften Ausgestaltung des erfindungsgemäßen Verfahrens ist vorgesehen, dass in dem Fall, dass die Seriennummer nicht verfügbar ist, eine Ortsposition des Feldgeräts, welche insbesondere über ein GPS-Modul am Feldgerät oder an dem mobilen Gerät ermittelt wird oder manuell über ein Bedienelement und/oder Spracheingabeelement in dem Feldgerät oder in dem mobilen Gerät eingegeben wird, an den Server übermittelt wird, oder ein Foto des Feldgeräts, welches insbesondere vor Ort von dem mobilen Gerät aufgenommen wurde, an den Server übermittelt wird, wobei der Server anhand der Ortsposition oder des Fotos des Feldgeräts das zum Feldgerät passende digitale Abbild ermittelt. Es kann auch vorgesehen sein, interne Bezeichnungen der Anlagen, wie diese auf einem Anlagenplan zu finden sind, zu übermitteln, um das Feldgerät bestimmten zu können.

Gemäß einer ersten Variante des erfindungsgemäßen Verfahrens ist vorgesehen, dass das Abfragen der weiteren Informationen per Sprachausgabe am Feldgerät oder an dem mobilen Gerät über das jeweilige Spracheingabe- und Sprachausgabemittel erfolgt.

Gemäß einer zweiten Variante des erfindungsgemäßen Verfahrens ist vorgesehen, dass das Abfragen der weiteren Informationen grafisch über ein Anzeige- und Bedienelement des Feldgeräts oder des mobilen Geräts erfolgt.

Es kann auch vorgesehen sein, mehrere Bediener heranzuziehen. Beispielsweise können die Abfragen gleichzeitig an einen ersten Bediener, den Servicetechniker, und an einen zweiten Bediener, einen Mitarbeiter im Service des Feldgeräteherstellers, übermittelt werden. Die kognitiven Algorithmen überprüfen und vergleichen dann die Antworten der beiden Bediener und führen Gegenproben durch, um die weiteren Informationen effizient zu extrahieren.

Gemäß einer vorteilhaften Ausgestaltung des erfindungsgemäßen Verfahrens ist vorgesehen, dass der Bediener die weiteren Informationen per Spracheingabe an dem Feldgerät oder an dem mobilen Gerät, oder über Eingabe der Informationen an dem jeweiligen Anzeige- und Bedienelement an den Server übermittelt.

Gemäß einer vorteilhaften Ausgestaltung des erfindungsgemäßen Verfahrens ist vorgesehen, dass das mobile Gerät oder das Feldgerät die Spracheingaben mittels künstlicher Intelligenz analysiert, und insbesondere mit früheren Spracheingaben vergleicht, und die darin enthaltenen Befehle und/oder weiteren Informationen extrahiert. Der Bediener muss daher seinen gewohnten Sprachstil nicht verändern, sondern kann die Antwort auf die Abfrage des Servers in seiner üblichen Ausdrucksweise formulieren. Das mobile Gerät, bzw. das Feldgerät analysiert daraufhin die Sprachantwort und extrahiert den relevanten Inhalt und übersetzt diesen in die weiteren Informationen. Als Beispiel müsste der Bediener bei der Frage nach dem Messmedium nicht das Wort "Wasser" nennen, sondern könnte einen Satz formulieren, aus welchem das mobile Gerät, bzw. das Feldgerät die relevanten Informationen extrahiert. Je häufiger ein Bediener mit dem System gearbeitet hat, desto zuverlässiger gelingt ein korrektes Extrahieren der relevanten Informationen, da das System den Sprachstil und die Ausdrucksweise des Bedieners erlernen kann.

Gemäß einer vorteilhaften Ausgestaltung des erfindungsgemäßen Verfahrens ist vorgesehen, dass die Anwendungsapplikation das Abbild des Feldgeräts mit weiteren digitalen Abbildern von typengleichen Feldgeräten, oder von Feldgeräten, welche in ähnlichen Messstellen eingesetzt sind, vergleicht und das Resultat des Vergleichs in das Erstellen des Parametersatzes miteinfließen lässt. Auf diese Art und Weise lassen sich in ähnlichen Applikationen bewährte Parametersätze wieder verwenden. Beispielsweise kann geprüft werden, ob typengleiche Feldgeräte in ähnlichen Applikationen eingesetzt werden. Durch Überprüfung deren Historie kann ermittelt werden, ob ein Parametersatz häufig geändert wurde, was indirekt Rückschlüsse auf die Qualität der einzelnen Parametersätze erlaubt. Es kann dann vorgesehen sein, nur Parametersätze, die länger als einen bestimmten festgelegten Zeitraum benutzt werden zu berücksichtigen.

Gemäß einer vorteilhaften Ausgestaltung des erfindungsgemäßen Verfahrens ist vorgesehen, dass sich der Bediener zum Initiieren des Verfahrens gegenüber dem Server mittels des Feldgeräts oder des mobilen Geräts durch einen Fingerabdruck oder durch seine Stimme authentifiziert, wobei bei der Auswertung durch seine Stimme charakteristische Eigenschaften seiner Stimme, insbesondere das Frequenzspektrum der Stimmfarbe oder der Artikulation, bzw. Aussprache, analysiert werden. Diese beiden Varianten sind äußerst fälschungssicher und ermöglichen nur berechtigten Bedienern ein Parametrieren eines Feldgeräts mittels des erfindungsgemäßen Verfahrens.

Eine alternative Variante sieht vor, dass auch das Feldbusnetzwerk, bzw. die in dem Feldbusnetzwerk enthaltenen Komponenten (beispielsweise übergeordnete Einheiten, Gateways, Remote I/Os, etc.) digitale Abbilder auf dem Server aufweisen. Somit ist es möglich, das erfindungsgemäße Verfahren auch zur Konfiguration/Parametrierung, Inbetriebnahme und Instandhaltung des Feldbusnetzwerks, bzw. der Komponenten des Feldbusnetzwerks, zu verwenden.

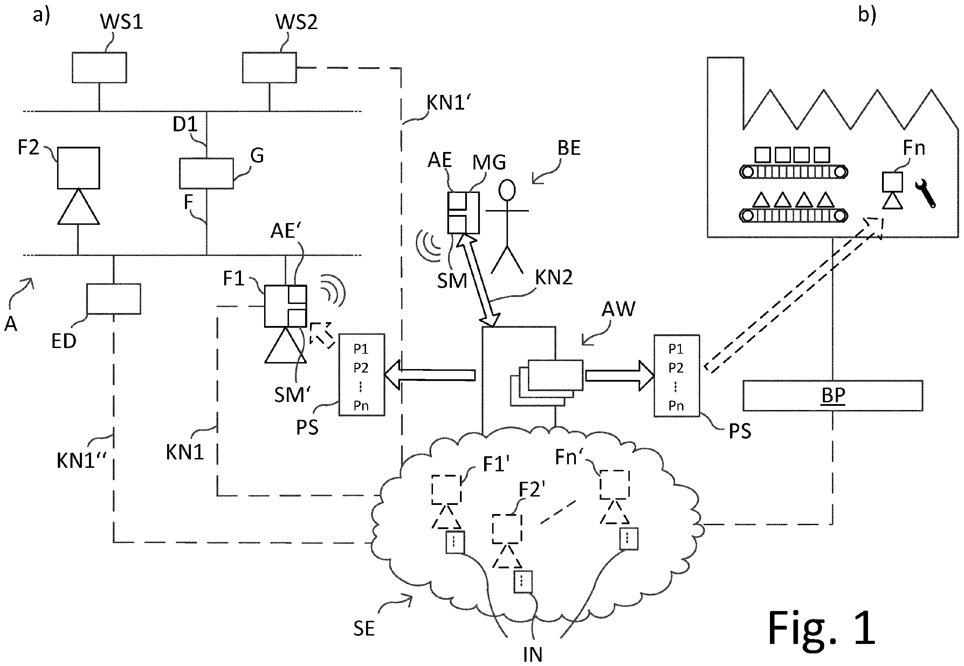

Die Erfindung wird anhand der nachfolgenden Figuren näher erläutert. Es zeigen
Fig. 1: einen schematischen Überblick über zwei Anwendungsbeispiele des erfindungsgemäßen Verfahrens.

Fig. 1 zeigt einen schematischen Überblick über zwei Anwendungsbeispiele des erfindungsgemäßen Verfahrens. In einem ersten Anwendungsbeispiel, in Fig. 1 a) gezeigt, ist eine Anlage A der Automatisierungstechnik dargestellt. An einem Datenbus D1 sind mehrere Workstation-PC WS1, WS2 in der Leitebene der Anlage angeschlossen. Diese Workstation-PCs dienen als übergeordnete Einheiten (Leitsystem bzw. Steuereinheit), unter anderem zur Prozessvisualisierung, Prozessüberwachung und zum Engineering wie zum Bedienen und Überwachen von Feldgeräten. Der Datenbus D1 arbeitet z. B. nach dem Profibus DP-Standard oder nach dem HSE (High Speed Ethernet)-Standard der Foundation Fieldbus. Über ein Gateway G, das auch als Linking Device, Field Controller oder auch als Segment-Koppler bezeichnet wird, ist der Datenbus D1 mit einem Feldbus-Segment verbunden. Das Feldbus-Segment besteht aus mehreren Feldgeräten F1, F2 die über einen Feldbus F miteinander verbunden sind. Bei den Feldgeräten F1, F2 kann es sich sowohl um Sensoren oder um Aktoren handeln. Der Feldbus F arbeitet entsprechend nach einem der bekannten Feldbusstandards, beispielsweise Profibus, Foundation Fieldbus oder HART. Neben Schnittstellen, mittels denen die Feldgeräte F1, F2 mit dem Feldbus F verbunden sind, können sie Feldgeräte F1, F2 umfassen, mittels welcher die Feldgeräte F1, F2 einen sekundären Kommunikationskanal etablieren, um beispielsweise IoT-Services zu nutzen. Hierfür weisen die Feldgeräte F1, F2 einen SIM-Kartenslot auf, der zweite Kommunikationskanal nutzt dann LTE, LPWA, NB-loT, 4G oder 5G.

Auf einem Server S ist zu jedem der Feldgeräte F1, F2 ein digitales Abbild F1', F2' gespeichert. Hierbei ist insbesondere vorgesehen, dass der Server S von dem Feldgerätehersteller zur Verfügung gestellt wird. Vorteilhafterweise ist zu jedem der von dem Feldgerätehersteller verkauften Feldgeräte F1, F2, ..., Fn ein digitales Abbild F1', F2', ..., Fn' auf dem Server S vorhanden. Das digitale Abbild F1', F2', ..., Fn' eines Feldgeräts F1, F2, ..., Fn fungiert als dessen "Ebenbild" und besitzt die identischen Eigenschaften und Informationen IN wie das physische Feldgerät F1, F2, ..., Fn, insbesondere dieselben Konfigurationseinstellungen, sowie die zu dem jeweiligen Feldgerät verknüpften messstellenrelevante Informationen, wie beispielsweise das Messmedium, die Tankgröße, etc.

Der Server S ist insbesondere über das Internet erreichbar und ist bevorzugt als Cloud Computing Plattform ausgestaltet. Jede Änderung am physischen Feldgerät F1, F2, ..., Fn wird direkt mit dem jeweiligen digitalen Abbild F1', F2', ..., Fn synchronisiert, so dass dieses jederzeit identisch zu dem physischen Feldgerät F1, F2, ..., Fn ist.

In dem ersten Anwendungsbeispiel werden hierfür die aktualisierten Informationen über ein erstes Kommunikationsnetzwerk KN1, KN1', KN1", wobei es sich bevorzugt um das Internet handelt, an den Server S übermittelt. In einer ersten Variante ist das Feldgerät F1, F2 selbst mit dem Server S über das erste Kommunikationsnetz KN1 verbunden. Beispielsweise wird das erste Kommunikationsnetzwerk Kn1 durch obig erwähnten zusätzlichen Kommunikationskanal aufgebaut, bzw. verbindet sich ein Feldgerät F1, F2 mit dem ersten Kommunikationsnetzwerk KN1 mittels des zusätzlichen Kommunikationskanals. In einer zweiten Variante ist einer der Workstation-PCs WS1, WS2 der Leitebene der Anlage A mit dem ersten Kommunikationsnetzwerk verbunden und übermittelt die Änderungen eines der Feldgeräte F1, F2 an den Server S. In einer dritten Variante ist in der Anlage A zumindest ein sogenanntes Edge Device ED vorgesehen, welches mit dem Feldbus F verbunden ist und welches relevante Informationen über die Feldgeräte F1, F2 durch Mithören des Datenverkehrs des Feldbus' F oder durch Stellen aktiver Anfragen an die Feldgeräte F1, F2 loggt. Das Edge Device ED ist mit dem ersten Kommunikationsnetzwerk KN1" verbunden und übermittelt die Änderungen an einem Feldgerät F1, F2 an den Server S, welcher das jeweilige dazugehörige digitale Abbild F1', F2' aktualisiert.

Im in Fig. 1 a) gezeigten Ausführungsbeispiel wird die Messstelle des Feldgeräts F1 verändert. Damit das Feldgerät F1 die Messaufaufgaben weiterhin genau und präzise übernehmen kann, muss dieses hierfür neu parametriert werden. Allerdings weisen Feldgeräte F1, F2 üblicherweise eine große Anzahl an Parametern auf, so dass ein Parametrieren eine aufwendige Methode darstellt, für welches geschultes Personal vonnöten ist.

Das erfindungsgemäße Verfahren bietet eine Möglichkeit, um auch unerfahrenen Anwendern ein zuverlässiges Parametrieren ihrer Feldgeräte F1, F2 zu erlauben:
In einem ersten Schritt verbindet sich ein Bediener BE mittels eines mobilen Geräts MG über ein zweites Kommunikationsnetzwerk KN2 mit dem Server S und authentifiziert sich gegenüber dem Server S, beispielsweise mittels eines Passworts, mittels eines Fingerabdrucks oder mittels seiner Stimme. Bei dem mobilen Gerät MG handelt es sich insbesondere um ein Smartphone. Es ist vorteilhafterweise vorgesehen, dass auf dem Smartphone MG eine Applikationsanwendung installiert ist, welche das Verbinden mit dem Server S vornimmt und den Bediener BE bei der Authentifizierung und den nachfolgenden Verfahrensschritten unterstützt.

In einem zweiten Verfahrensschritt startet der Bediener BE die Parametrierung des Feldgeräts F1. Hierfür spricht der Bediener BE einen Sprachbefehl in das mobile Gerät MG ein. Das mobile Gerät MG verfügt über ein Spracheingabemittel SM, insbesondere ein Mikrofon, welche den Sprachbefehl aufnimmt. Der Sprachbefehl lautet beispielsweise: "Parametriere das Feldgerät!", oder "optimaler Parametersatz für das Feldgerät". Das mobile Gerät MG analysiert den Sprachbefehl und extrahiert aus diesem die zu lösende Aufgabe. Die Analyse des Sprachbefehls findet mittels künstlicher Intelligenz statt. Insbesondere lernt die künstliche Intelligenz von dem Bediener und "gewöhnt" sich an dessen Formulierungs-, Artikulations- und Sprachstil, um die Sprachbefehle mit hoher Wahrscheinlichkeit korrekt interpretieren zu können. Hierfür kann die künstliche Intelligenz den Sprachbefehl auch mit früheren Sprachbefehlen vergleichen, um eine Übereinstimmung zu detektieren. Vorteilhafterweise kann vorgesehen sein, dass die auf dem mobilen Gerät MB laufende Applikationssoftware in mehreren Sprachen verfügbar ist und dadurch das Erkennen und Ausgeben mehrerer Sprachen erlaubt.

In einem dritten Verfahrensschritt übermittelt die mobile Einheit den Befehl zum Parametrieren des Feldgerät F1 an den Server S. Um das zum Feldgerät F1 passende digitale Abbild F1' zu ermitteln, sendet der Server S eine Anfrage an das mobile Gerät MG. Das mobile Gerät MG bittet anschließend den Bediener BE, per Sprachausgabe über das Sprachausgabemittel SM des mobilen Geräts oder per Anzeige auf der Anzeigeeinheit AE des mobilen Geräts MG, eine Identifikationsinformation des Feldgeräts F1 zu nennen. Hierfür stehen mehrere Optionen zur Verfügung:
In einer ersten Variante gibt der Bediener BE die Identifikationsinformation, in Form der Seriennummer des Feldgeräts F1 oder in Form des Tags des Feldgeräts F1, direkt (über Spracheingabe oder Eingabe am Bedienelement AE) im mobilen Gerät ein. Ist dem Bediener die Identifikationsinformation nicht bekannt, so verbindet der Bediener BE die Bedieneinheit BE in einer zweiten Variante mit dem Feldgerät F1, beispielweise mittels einer Kabelverbindung oder über eine Drahtlosverbindung, insbesondere über Bluetooth, Secure WiFi oder NFC, und liest die Identifikationsinformation aus dem Feldgerät F1 aus. Ist dies nicht möglich, so erhebt das mobile Gerät MG in einer dritten Variante die aktuelle Ortsposition des Bedieners BE, welcher sich in der Nähe des Feldgeräts F1 befindet, insbesondere über GPS oder GSM-Triangulation, und übermittelt diese an den Server S, welcher dann selbstständig das passende digitale Abbild F1' ermittelt, da dieses als Information IN die Ortsinformationen des Feldgeräts F1 aufweist. Alternativ nimmt der Bediener BE mit dem mobilen Gerät MG ein Foto des Feldgeräts F1 auf und übermittelt dieses an den Server S, so dass dieser anhand markanter Merkmale das Feldgerät F1 identifizieren kann. In einer vierten Variante nennt der Bediener BE Umgebungsmerkmale des Feldgeräts F1 (Beispielsweise: "Ich befinde mich in Anlageteil B, Abschnitt C1, neben mir befindet sich ein großer Tank mit der Aufschrift DFS 34."), mittels welcher der Server S das wahrscheinlich zutreffende Feldgerät F1 ermittelt und dem Bediener BE sicherheitshalber zur Bestätigung vorschlägt. Erfolgt die Nennung der Umgebungsmerkmale mittels Spracheingabe, so ermittelt auch hier das mobile Gerät MG mittels künstlicher Intelligenz die relevanten Informationen aus der Spracheingabe.

Nach erfolgtem Übermitteln der Identifikationsinformation und dem Identifizieren des zum Feldgerät F1 korrespondieren digitalen Abbilds F1' erstellt eine auf dem Server S ablaufende Anwendungsapplikation AW einen Parametersatz PS für das Feldgerät F1. Hierfür analysiert die Anwendungsapplikation AW die im digitalen Abbild F1' enthaltenen Informationen IN. Reichen diese Informationen aus, um einen Parametersatz PS erstellen zu können, wird dieser von der Anwendungsapplikation AW erstellt und an das mobile Gerät MG, oder, falls das Feldgerät mittels dem ersten Kommunikationsnetzwerk KN1, KN1', KN1" verbunden ist, direkt an das Feldgerät F1 übermittelt. Dieses wird daraufhin automatisch, oder nach Bestätigung des Bedieners BE, mit dem erstellten Parametersatz PS parametriert.

In dem Fall, dass die im digitalen Abbild F1' enthaltenen Informationen IN nicht ausreichen, um einen Parametersatz PS erstellen zu können, stellt der Server eine Anfrage an den Bediener BE. Diese wird ihm über das mobile Gerät, wie schon bei der Anfrage der Identifikationsinformation, mitgeteilt. Der Bediener BE nennt dem Server S daraufhin die benötigten weiteren Informationen. Im Falle, dass diese noch nicht ausreichen, um den Parametersatz PS erstellen zu können, werden auf dieselbe Art und Weise weitere Anfragen gestellt, bis alle notwendigen Informationen vorhanden sind.

Das Abfragen der weiteren Informationen erfolgt entweder per Sprachausgabe mittels des Sprachausgabemittels SM des mobilen Geräts MG oder per Anzeige der Abfrage auf dem Anzeigeelement AE des mobilen Geräts MG. Die Nennung der weiteren Informationen tätigt der Bediener BE daraufhin per Spracheingabe am Spracheingabemittel SM des mobilen Geräts oder per Eingabe am Bedienelement AE des mobilen Geräts MG. Erfolgt die Nennung der weiteren Informationen per Spracheingabe, so ermittelt auch hier das mobile Gerät MG mittels künstlicher Intelligenz die relevanten Informationen aus der Spracheingabe.

Die Anwendungsapplikation AW benutzt hierbei zur Erstellung besagter Abfragen kognitive Algorithmen. Kognitive Algorithmen stellen ein Konzept des maschinellen Erlernens dar. Mithilfe dieser kognitiven Algorithmen prüft die Anwendungsapplikation AW die bereits vorhandenen Informationen IN des digitalen Abbild F1', sowie die Historie der Anlage A, in der sich das Feldgerät F1 befindet. In der Historie befinden sich eventuell benötigte weitere Informationen, beispielsweise die Information über einen Austausch von Komponenten. Anschließend ermittelt die Anwendungsapplikation mithilfe der kognitiven Algorithmen diejenigen weiteren Informationen, welche zur Erstellung des Parametersatzes PS noch benötigt werden und erstellt auf dieser Basis selbstständig eine gezielte Abfrage an den Bediener BE. Die Antwort des Bedieners BE wird erneut geprüft und, falls nach wie vor nicht alle benötigten weiteren Informationen vorhanden sind, weitere Abfragen unter Berücksichtigung der vorherigen Antworten des Bedieners erstellt, bis genügend Informationen IN und weitere Informationen vorliegen, um für das Feldgerät F1 den Parametersatz PS erstellen zu können.

Auf diese Art und Weise erfolgen die Abfragen dynamisch und werden für die spezifische Situation generiert. Es werden somit keine Abfragen aus einem vorgefertigten Katalog verwendet, sondern diese Abfragen je nach Situation gezielt erstellt.

Alternativ ist vorgesehen, dass das Feldgerät F1 selbst über Anzeige- und Bedienelemente AE', sowie über Spracheingabe- und Sprachausgabemittel SM', verfügt. In diesem Fall werden alle obig beschriebenen Aufgaben des mobilen Geräts (Authentifizieren gegenüber dem Server S, Initiieren des Verfahrens, Übermitteln der Identifikationsinformation und Anfragen/Eingeben der weiteren Informationen) von dem Feldgerät F1 übernommen. Der Vorteil hierbei ist, dass der Bediener BE in diesem Fall kein mobiles Gerät MG benötigt, um das Feldgerät F1 zu parametrieren. Allerdings muss das Feldgerät F1 hierbei über ausreichend große Leistungsreserven verfügen.

Des Weiteren kann vorgesehen sein, dass sich der Bediener BE nicht in der Anlage A aufhält, sondern von zuhause oder von seinem Arbeitsplatz aus eine Verbindung mit dem Server S herstellt. Den erstellten Parametersatz PS kann er sich anschließend herunterladen und zur Anlage A mitnehmen und das Feldgerät F1, F2 vor Ort mittels des Parametersatzes PS parametrieren.

In einem zweiten Anwendungsbeispiel, in Fig. 1 b) gezeigt, erfolgt das Erstellen des Parametersatzes PS direkt während der Fertigung eines Feldgeräts Fn, nach dessen Bestellung über eine Bestellplattform BP. Hierfür werden zuerst alle Informationen IN, die durch den Bestellvorgang bekannt sind, an den Server S übermittelt, wobei dieser ein digitales Abbild Fn' des Feldgeräts Fn erzeugt. Während des Fertigungsvorgangs werden simultan mit jeder Fertigungsstufe weitere Informationen hinzugefügt.

Die Bestellplattform übermittelt ebenfalls die Identifikationsinformation des Feldgeräts Fn an den Server S, so dass dessen Anwendungsapplikation AW anhand der im digitalen Abbild Fn' vorhandenen Informationen IN den Parametersatz PS erstellen kann. Auch hier kann es vorgesehen sein, weitere digitale Abbilder typengleicher Feldgeräte zum Erstellen des Parametersatzes PS heranzuziehen.

Nach Erstellen des Parametersatzes PS wird dieser vorzugsweise direkt an die Fertigung übermittelt, so dass das Feldgerät Fn direkt im Zuge der Fertigung mit dem Parametersatz parametriert wird und anschließend komplett parametriert an den Kunden übergeben werden kann.

### Bezugszeichenliste

- A: Anlage
- AE, AE': Anzeige- und Bedienelement des mobilen Geräts, bzw. des Feldgeräts
- AW: Anwendungsapplikation
- BE: Bediener
- BP: Bestellplattform
- D1: Datenbus
- ED: Edge Device
- F: Feldbus
- F1, F2, ..., Fn: Feldgerät
- F1', F2', ..., Fn': digitales Abbild
- G: Gateway
- IN: Informationen über Feldgerät
- KN1, KN1', KN1": erstes Kommunikationsnetzwerk
- KN2: zweites Kommunikationsnetzwerk
- MG: Mobiles Gerät
- PS: Parametersatz
- SE: Server
- SM, SM': Spracheingabe- und Sprachausgabemittel des mobilen Geräts, bzw. des Feldgeräts
- WS1, WS2: Workstation PC

## Patentansprüche

1. Verfahren zum Parametrieren eines Feldgeräts (F1, F2, ..., Fn) der Automatisierungstechnik, welches mit einem Server (SE) über ein erstes Kommunikationsnetzwerk (KN1, KN1', KN1") in Kommunikationsverbindung steht, umfassend:
- Initiieren des Verfahrens durch Übermitteln eines Befehls zum Parametrieren oder zum Vornehmen von Änderungen der Parameterwerte des Feldgeräts (F1, F2, ..., Fn) an den Server (SE);
- Übermitteln einer Identifikationsinformation des Feldgeräts (F1, F2, ..., Fn) an den Server (SE);
- Ermitteln eines auf dem Server (SE) gespeicherten digitalen Abbilds (F1', F2', ..., Fn') des Feldgeräts (F1, F2, ..., Fn) anhand der übermittelten Identifikationsinformation, welches digitale Abbild (F1', F2', ..., Fn') Informationen (IN) über das Feldgerät (F1, F2, ..., Fn) enthält, sowie derart ausgestaltet ist, das Verhalten des Feldgeräts (F1, F2, ..., Fn) simuliert, bzw. emuliert, wiederzugeben;
- Erstellen und Vorschlagen zumindest eines Parametersatzes (PS) für das Feldgerät (F1, F2, ..., Fn) anhand der auf dem Server (SE) enthaltenen Informationen (IN) über das Feldgerät (F1, F2, ..., Fn) mittels einer auf dem Server (SE) ausgeführten Anwendungsapplikation (AW);
- Auswahl und Bestätigen des vorgeschlagenen Parametersatzes (PS) durch einen Bediener (BE); und
- Übermitteln des bestätigten Parametersatzes (PS) an das Feldgerät (F1, F2, ..., Fn) und Parametrieren des Feldgeräts (F1, F2, ..., Fn) mit dem übermittelten Parametersatz (PS)
wobei das Verfahren durch einen Bediener (BE) initiiert wird,
wobei in dem Falle, dass auf dem Server (SE) nicht ausreichend Informationen (IN) zum Erstellen und Vorschlagen des Parametersatzes (PS) vorhanden sind, der Server (SE) weitere Informationen über das Feldgerät (F1, F2, ..., Fn) von dem Bediener (BE) abfragt, wobei es sich bei den Informationen (IN) über das Feldgerät (F1, F2, ..., Fn) und bei den weiteren Informationen über das Feldgerät (F1, F2, ..., Fn) um Konfigurationseinstellungen des Feldgeräts (F1, F2, ..., Fn) und messstellenrelevante Informationen handelt, und wobei die Abfragen des Servers (SE) mittels kognitiven Algorithmen abhängig von den bereits vorhandenen Informationen (IN), von der Historie der Anlage (A), in der sich die Messstelle des Feldgeräts (F1, F2, ..., Fn) befindet, und von den erfolgten Antworten des Bedieners (BE) dynamisch generiert werden.

2. Verfahren nach Anspruch 1, wobei die Informationen (IN) über das Feldgerät (F1, F2, ..., Fn) beim Bestellvorgang des Feldgeräts (F1, F2, ..., Fn) auf den Server (SE) geladen werden und das digitale Abbild (F1', F2', ..., Fn') erstellt wird, und wobei jede Änderung der Konfigurationseinstellungen und der messstellenrelevanten Informationen an den Server (SE) zur Aktualisierung des digitalen Abbilds (F1', F2', ..., Fn') übermittelt werden.

3. Verfahren nach einem der Ansprüche 1 oder 2, wobei das Verfahren, insbesondere von einer Bestellplattform (BP), nach einer Bestellung des Feldgeräts (F1, F2, ..., Fn) initiiert wird, wobei die Identifikationsinformation, insbesondere während des Fertigungsvorgangs des Feldgeräts (F1, F2, ..., Fn), an den Server (SE) übermittelt wird und das Feldgerät (F1, F2, ..., Fn) nach seiner Fertigung mit dem übermittelten Parametersatz (PS) konfiguriert wird.

4. Verfahren nach Anspruch 1, wobei der Bediener (BE) den Befehl zum Parametrieren des Feldgeräts (F1, F2, ..., Fn) über ein mobiles Gerät (MG), welches über ein zweites Kommunikationsnetzwerk (KN2) mit dem Server (SE) verbunden ist und über ein Anzeige- und Bedienelement (AE) und/oder Spracheingabe- und Sprachausgabemittel (SM) verfügt, oder über das Feldgerät (F1, F2, ..., Fn) direkt, welches über ein Anzeigeund Bedienelement (AE') und/oder Spracheingabe- und Sprachausgabemittel (SM') verfügt, mittels Eingabe eines Befehls an dem jeweiligen Anzeige- und Bedienelement (AE, AE') oder mittels Spracheingabe an dem jeweiligen Spracheingabe- und Sprachausgabemittel (SM, SM') an den Server (SE) übermittelt.

5. Verfahren nach Anspruch 4, wobei als Identifikationsinformation die Seriennummer und/oder der TAG des Feldgeräts (F1, F2, ..., Fn) an den Server (SE) übermittelt werden.

6. Verfahren nach Anspruch 5, wobei der Bediener (BE) die Seriennummer manuell im mobilen Gerät (MG) eingibt, oder das mobile Gerät (MG) die Seriennummer aus dem Feldgerät (F1, F2, ..., Fn) ausliest.

7. Verfahren nach einem der Ansprüche 5 oder 6, wobei in dem Fall, dass die Seriennummer nicht verfügbar ist, eine Ortsposition des Feldgeräts (F1, F2, ..., Fn), welche insbesondere über ein GPS-Modul am Feldgerät (F1, F2, ..., Fn) oder an dem mobilen Gerät (MG) ermittelt wird oder manuell über ein Bedienelement (AE, AE') und/oder Spracheingabeelement (SM, SM') in dem Feldgerät (F1, F2, ..., Fn) oder in dem mobilen Gerät (MG) eingegeben wird, an den Server (SE) übermittelt wird, oder ein Foto des Feldgeräts (F1, F2, ..., Fn), welches insbesondere vor Ort von dem mobilen Gerät (MG) aufgenommen wurde, an den Server (SE) übermittelt wird, wobei der Server (SE) anhand der Ortsposition oder des Fotos des Feldgeräts (F1, F2, ..., Fn) das zum Feldgerät (F1, F2, ..., Fn) passende digitale Abbild (F1', F2', ..., Fn') ermittelt.

8. Verfahren nach einem der Ansprüche 4 bis 7, wobei das Abfragen der weiteren Informationen per Spracheingabe am Feldgerät (F1, F2, ..., Fn) oder an dem mobilen Gerät (MG) über das jeweilige Spracheingabe- und Sprachausgabemittel (SM, SM') erfolgt.

9. Verfahren nach Anspruch 1, wobei das Abfragen der weiteren Informationen grafisch über ein Anzeige- und Bedienelement (AE, AE') des Feldgeräts (F1, F2, ..., Fn) oder des mobilen Geräts (MG) erfolgt.

10. Verfahren nach einem der Ansprüche 1, 8 oder 9, wobei der Bediener (BE) die weiteren Informationen per Spracheingabe an dem Feldgerät (F1, F2, ..., Fn) oder an dem mobilen Gerät (MG), oder über Eingabe der weiteren Informationen an dem jeweiligen Anzeige- und Bedienelement (AE, AE') an den Server (SE) übermittelt.

11. Verfahren nach einem der Ansprüche 5 bis 10, wobei das mobile Gerät (MG) oder das Feldgerät (F1, F2, ..., Fn) die Spracheingaben mittels künstlicher Intelligenz analysiert, und insbesondere mit früheren Spracheingaben vergleicht, und die darin enthaltenen Befehle und/oder weiteren Informationen extrahiert.

12. Verfahren nach einem der vorherigen Ansprüche, wobei die Anwendungsapplikation (AW) das Abbild (F1', F2', ..., Fn') des Feldgeräts (F1, F2, ..., Fn) mit weiteren digitalen Abbildern (F1', F2', ..., Fn') von typengleichen Feldgeräten (F1, F2, ..., Fn), oder von Feldgeräten (F1, F2, ..., Fn), welche in ähnlichen Messstellen eingesetzt sind, vergleicht und das Resultat des Vergleichs in das Erstellen des Parametersatzes (PS) miteinfließen lässt.

13. Verfahren nach einem der Ansprüche 4 bis 12, wobei sich der Bediener (BE) zum Initiieren des Verfahrens gegenüber dem Server (SE) mittels des Feldgeräts (F1, F2, ..., Fn) oder des mobilen Geräts (MG) durch einen Fingerabdruck oder durch seine Stimme authentifiziert, wobei bei der Auswertung durch seine Stimme charakteristische Eigenschaften seiner Stimme, insbesondere das Frequenzspektrum der Stimmfarbe oder der Artikulation, bzw. Aussprache, analysiert werden.

## Claims

1. Procedure to parameterize a field device (F1, F2, ..., Fn) used in automation technology, wherein said device is in communication with a server (SE) via a first communication network (KN1, KN1', KN1"), wherein said procedure comprises the following steps:
- Initiation of the procedure by transmitting a command to the server (SE) to parameterize or to make changes to the parameter values of the field device (F1, F2, ..., Fn);
- Transmission of identification information of the field device (F1, F2, ..., Fn) to the server (SE);
- Determination of a digital image (F1', F2', ..., Fn') of the field device (F1, F2, ..., Fn) stored on the server (SE) on the basis of the transmitted identification information, wherein said digital image (F1', F2', ..., Fn') contains information (IN) about the field device (F1, F2, ..., Fn) and is designed to simulate or emulate the behavior of the field device (F1, F2, ..., Fn);
- Creation and proposal of at least a parameter set (PS) for the field device (F1, F2, ..., Fn) on the basis of the information (IN) relating to the field device (F1, F2, ..., Fn) that is on the server (SE) by means of an application (AW) executed on the server (SE);
- Selection and confirmation of the proposed parameter set (PS) by an operator (BE); and
- Transmission of the confirmed parameter set (PS) to the field device (F1, F2, ..., Fn) and parameterization of the field device (F1, F2, ..., Fn) with the transmitted parameter set (PS)
wherein said procedure is initiated by an operator (BE),
wherein, in the event that not enough information (IN) is available on the server (SE) to create and propose the parameter set (PS), the server (SE) asks the operator (BE) for additional information concerning the (F1, F2, ..., Fn),
wherein the information (IN) about the field device (F1, F2, ..., Fn) and the additional information about the field device (F1, F2, ..., Fn) refer to configuration settings of the field device (F1, F2, ..., Fn) and information that relates to the measuring point, and wherein the questions asked by the server (SE) are generated dynamically using cognitive algorithms depending on the information (IN) already available, the history of the installation (A) in which the measuring point of the field device (F1, F2, ..., Fn) is located, and the responses provided by the operator (BE).

2. Procedure as claimed in Claim 1, wherein the information (IN) about the field device (F1, F2, ..., Fn) is uploaded to the server (SE) during the process of ordering the field device (F1, F2, ..., Fn) and the digital image (F1', F2', ..., Fn') is created, and
wherein each change to the configuration settings and the information related to the measuring point are transmitted to the server (SE) in order to update the digital image (F1', F2', ..., Fn').

3. Procedure as claimed in one of the Claims 1 or 2, wherein the procedure is initiated by an order platform (BP) after the field device (F1, F2, ..., Fn) has been ordered, wherein the identification information is transmitted to the server (SE), particularly during the field device (F1, F2, ... Fn) production process, and the field device (F1, F2, ..., Fn) is configured with the transmitted parameter set (PS) after the production process.

4. Procedure as claimed in Claim 1, wherein the operator (BE) transmits the command to parameterize the field device (F1, F2, ..., Fn) to the server (SE) via a mobile device (MG) that is connected to a server (SE) via a second communication network (KN2) and which has a display and operating element (AE) and/or voice input and voice output equipment (SM), or directly via the field device (F1, F2, ..., Fn) which has a display and operating element (AE') and/or voice input and voice output equipment (SM'), by entering a command at the display and operating element (AE, AE') or by means of voice input at the voice input and voice output equipment (SM, SM').

5. Procedure as claimed in Claim 4, wherein the serial number and/or the TAG of the field device (F1, F2, ..., Fn) are transmitted to the server (SE) as identification information.

6. Procedure as claimed in Claim 5, wherein the operator (BE) enters the serial number manually in the mobile device (MG), or the mobile device (MG) reads the serial number out of the field device (F1, F2, ..., Fn).

7. Procedure as claimed in one of the Claims 5 or 6, wherein, in the event that the serial number is not available, a geoposition of the field device (F1, F2, ..., Fn) - which is determined particularly via a GPS module on the field device (F1, F2, ..., Fn) or on the mobile device (MG), or is entered manually in the field device (F1, F2, ..., Fn) or the mobile device (MG) via a control element (AE, AE') and/or a voice input element (SM, SM') - is transmitted to the server (SE), or a photo of the field device (F1, F2, ...; Fn), which is particularly taken onsite by the mobile device (MG), is transmitted to the server (SE), wherein the server (SE) determines the digital image (F1', F2', ..., Fn') that matches the field device (F1, F2, ..., Fn) on the basis of the geoposition or the photo of the field device (F1, F2, ..., Fn).

8. Procedure as claimed in one of the Claims 4 to 7, wherein the additional information is queried via voice entry at the field device (F1, F2, ..., Fn) or at the mobile device (MG) via the voice input and voice output equipment (SM, SM').

9. Procedure as claimed in Claim 1, wherein the additional information is queried graphically via a display and operating element (AE, AE') of the field device (F1, F2, ..., Fn) or of the mobile device (MG).

10. Procedure as claimed in one of the Claims 1, 8 or 9, wherein the operator (BE) transmits the additional information to the server (SE) via voice entry at the field device (F1, F2, ..., Fn) or mobile device (MG), or by entering the additional information at the respective display and operating element (AE, AE').

11. Procedure as claimed in one of the Claims 5 to 10, wherein the mobile device (MG) or the field device (F1, F2, ..., Fn) analyzes the voice input using artificial intelligence, and particularly compares the voice input to earlier voice input, and extracts the commands and/or other information the input contains.

12. Procedure as claimed in one of the previous claims, wherein the application (AW) compares the image (F1', F2', ..., Fn') of the field device (F1, F2, ..., Fn) with other digital images (F1', F2', ..., Fn') of field devices (F1, F2, ..., Fn) of the same kind or of field devices (F1, F2, ..., Fn) that are used in similar measuring points and the result of the comparison is incorporated into the creation of the parameter set (PS).

13. Procedure as claimed in one of the Claims 4 to 12, wherein, in order to initiate the procedure, the operator (BE) provides authentication to the server (SE) via the field device (F1, F2, ..., Fn) or the mobile device (MG) by providing a fingerprint or by his/her voice, and wherein, in the analysis of the voice, characteristic features of the operator's voice are analyzed, particularly the frequency spectrum of the voice timbre or the articulation or pronunciation.

## Revendications

1. Procédé destiné au paramétrage d'un appareil de terrain (F1, F2, ..., Fn) de la technique d'automatisation, lequel appareil est en communication avec un serveur (SE) par l'intermédiaire d'un premier réseau de communication (KN1, KN1', KN1"), lequel procédé comprend les étapes suivantes :
- Activation du procédé par la transmission au serveur (SE) d'une commande de paramétrage ou de modification des valeurs de paramètres de l'appareil de terrain (F1, F2, ..., Fn) ;
- Transmission des informations d'identification de l'appareil de terrain (F1, F2, ..., Fn) au serveur (SE) ;
- Détermination d'une image numérique (F1', F2', ..., Fn') de l'appareil de terrain (F1, F2,..., Fn) stockée sur le serveur (SE) sur la base des informations d'identification transmises, laquelle image numérique (F1', F2', ..., Fn') contient des informations (IN) sur l'appareil de terrain (F1, F2, ..., Fn) et est conçue de manière à simuler ou émuler le comportement de l'appareil de terrain (F1, F2, ..., Fn) ;
- Création et proposition d'au moins un jeu de paramètres (PS) pour l'appareil de terrain (F1, F2, ..., Fn) sur la base des informations (IN) concernant l'appareil de terrain (F1, F2,..., Fn) contenues sur le serveur (SE) au moyen d'une application (AW) exécutée sur le serveur (SE) ;
- Sélection et confirmation du jeu de paramètres proposé (PS) par un opérateur (BE) ; et
- Transmission du jeu de paramètres confirmé (PS) à l'appareil de terrain (F1, F2, ..., Fn) et paramétrage de l'appareil de terrain (F1, F2, ..., Fn) avec le jeu de paramètres transmis (PS)
le procédé étant activé par un opérateur (BE),
procédé pour lequel, dans le cas où il n'y a pas suffisamment d'informations (IN) sur le serveur (SE) pour créer et proposer le jeu de paramètres (PS), le serveur (SE) demande des informations supplémentaires concernant l'appareil de terrain (F1, F2, ..., Fn) à l'opérateur (BE),
les informations (IN) concernant l'appareil de terrain (F1, F2, ..., Fn) et les informations supplémentaires concernant l'appareil de terrain (F1, F2, ..., Fn) étant des paramètres de configuration de l'appareil de terrain (F1, F2, ..., Fn) et des informations pertinentes sur le point de mesure, et les interrogations du serveur (SE) étant générées dynamiquement au moyen d'algorithmes cognitifs en fonction des informations (IN) déjà présentes, de l'historique de l'installation (A) dans laquelle se trouve le point de mesure de l'appareil de terrain (F1, F2, ..., Fn), et des réponses données par l'opérateur (BE).

2. Procédé selon la revendication 1, pour lequel les informations (IN) concernant l'appareil de terrain (F1, F2, ..., Fn) sont chargées sur le serveur (SE) pendant le processus de commande de l'appareil de terrain (F1, F2, ..., Fn) et l'image numérique (F1', F2', ..., Fn') est créée, et
pour lequel chaque changement des paramètres de configuration et des informations relatives au point de mesure est transmis au serveur (SE) pour mettre à jour l'image numérique (F1', F2', ..., Fn').

3. Procédé selon l'une des revendications 1 ou 2, pour lequel le procédé est activé, notamment par une plateforme de commande (BP), après une commande de l'appareil de terrain (F1, F2, ..., Fn), les informations d'identification étant transmises au serveur (SE), notamment pendant le processus de fabrication de l'appareil de terrain (F1, F2, ... Fn), et l'appareil de terrain (F1, F2, ..., Fn) étant configuré avec le jeu de paramètres (PS) transmis après sa fabrication.

4. Procédé selon la revendication 1, pour lequel l'opérateur (BE) transmet la commande de paramétrage de l'appareil de terrain (F1, F2, ..., Fn) par l'intermédiaire d'un appareil mobile (MG), qui est relié au serveur (SE) par un deuxième réseau de communication (KN2) et qui comporte un élément d'affichage et de commande (AE) et/ou des moyens d'entrée et de sortie vocale (SM), ou par l'intermédiaire de l'appareil de terrain (F1, F2, ..., Fn), qui présente un élément d'affichage et de commande (AE') et/ou des moyens d'entrée et de sortie vocaux (SM'), au serveur (SE) par l'entrée d'une commande sur l'élément d'affichage et de commande respectif (AE, AE') ou par une entrée vocale sur le moyen d'entrée et de sortie vocal respectif (SM, SM').

5. Procédé selon la revendication 4, pour lequel le numéro de série et/ou le TAG de l'appareil de terrain (F1, F2, ..., Fn) sont transmis au serveur (SE) comme informations d'identification.

6. Procédé selon la revendication 5, pour lequel l'opérateur (BE) entre le numéro de série manuellement dans l'appareil mobile (MG), ou l'appareil mobile (MG) lit le numéro de série à partir de l'appareil de terrain (F1, F2, ..., Fn).

7. Procédé selon l'une des revendications 5 ou 6, pour lequel, dans le cas où le numéro de série n'est pas disponible, une position de localisation de l'appareil de terrain (F1, F2, ..., Fn) - qui est déterminée notamment via un module GPS sur l'appareil de terrain (F1, F2, ..., Fn) ou sur l'appareil mobile (MG), ou qui est entrée manuellement dans l'appareil de terrain (F1, F2, ..., Fn) ou dans l'appareil mobile (MG) via un élément de commande (AE, AE') et/ou un élément d'entrée vocale (SM, SM') - est transmise au serveur (SE), ou une photo de l'appareil de terrain (F1, F2, ... ; Fn), qui a été prise notamment sur place par l'appareil mobile (MG), est transmise au serveur (SE), le serveur (SE) déterminant l'image numérique (F1', F2', ..., Fn') correspondant à l'appareil de terrain (F1, F2, ..., Fn) sur la base de la position de localisation ou de la photo de l'appareil de terrain (F1, F2, ..., Fn).

8. Procédé selon l'une des revendications 4 à 7, pour lequel l'interrogation des autres informations est réalisée par entrée vocale au niveau de l'appareil de terrain (F1, F2, ..., Fn) ou au niveau de l'appareil mobile (MG) via le moyen respectif d'entrée et de sortie vocale (SM, SM').

9. Procédé selon la revendication 1, pour lequel l'interrogation des autres informations est effectuée graphiquement par l'intermédiaire d'un élément d'affichage et de commande (AE, AE') de l'appareil de terrain (F1, F2, ..., Fn) ou de l'appareil mobile (MG).

10. Procédé selon l'une des revendications 1, 8 ou 9, pour lequel l'opérateur (BE) transmet les autres informations au serveur (SE) par entrée vocale sur l'appareil de terrain (F1, F2, ..., Fn) ou sur l'appareil mobile (MG), ou par entrée des autres informations sur l'élément d'affichage et de commande respectif (AE, AE').

11. Procédé selon l'une des revendications 5 à 10, pour lequel l'appareil mobile (MG) ou l'appareil de terrain (F1, F2, ..., Fn) analyse les entrées vocales au moyen d'une intelligence artificielle, et les compare notamment à des entrées vocales précédentes, et extrait les commandes et/ou les autres informations qu'elles contiennent.

12. Procédé selon l'une des revendications précédentes, pour lequel l'application (AW) compare l'image (F1', F2', ..., Fn') de l'appareil de terrain (F1, F2, ..., Fn) avec d'autres images numériques (F1', F2', ..., Fn') d'appareils de terrain (F1, F2, ..., Fn) du même type ou d'appareils de terrain (F1, F2, ..., Fn) qui sont utilisés dans des points de mesure similaires, et permet d'inclure le résultat de la comparaison dans la création du jeu de paramètres (PS).

13. Procédé selon l'une des revendications 4 à 12, pour lequel l'opérateur (BE) s'authentifie auprès du serveur (SE) au moyen de l'appareil de terrain (F1, F2, ..., Fn) ou de l'appareil mobile (MG) par une empreinte digitale ou par sa voix pour activer le procédé, des propriétés caractéristiques de sa voix, notamment le spectre de fréquence de la couleur de la voix ou l'articulation ou la prononciation, étant analysées lors de l'évaluation par sa voix.
